# EUROPEAN PATENT APPLICATION

(11) **EP 3 653 589 A1**
(43) Date of publication of application: **20.05.2020**
(21) Application number: 18831880.2
(22) Date of filing: 18.06.2018
(51) Int. Cl.: C03C 27/12, B60J 1/00

(54) **LAMINATED GLASS FOR VEHICLE FRONT WINDOWS**

(30) Priority: 12.07.2017 JP 2017135953; 25.10.2017 JP 2017205906
(71) Applicant: Central Glass Company, Limited, Yamaguchi 755-0001 (JP)
(72) Inventor: NIITSU Takao, Matsusaka-shi Mie 515-0001 (JP); MARUYAMA Kazuhide, Matsusaka-shi Mie 515-0001 (JP)
(74) Representative: Mewburn Ellis LLP
(86) International application number: PCT/JP2018/023099
(87) International publication number: WO 2019/012919

(57) **Abstract**

To provide laminated glass using an intermediate film having a wedge angle profile that is capable of reducing a double image on a HUD resulting from the influence of the curvature in the longitudinal direction of a window as well as the curvature in the horizontal direction of the window, with a configuration allowing easy manufacturing. Laminated glass for a vehicle front window including: a curved first glass plate having a trapezoidal or rectangular shape; a second glass plate having the same shape as the first glass plate; and an intermediate film disposed between the first and second glass plates, wherein an imaging section of an image projected from an imaging device incorporated in a dash board on a driver's seat side is included in an indoor side surface of the laminated glass in a state in which the laminated glass is incorporated in a vehicle body, the intermediate film is provided with a wedge angle profile in a longitudinal direction and a horizontal direction of the laminated glass, and a thickness based on the wedge angle profile of the intermediate film based on the wedge angle profile continuously decreases from an upper side to a lower side and continuously decreases in a direction from a driver's seat side to a passenger seat side.

## Description

### TECHNICAL FIELD

The present invention relates to curved laminated glass for a vehicle front window, applied as a display member of a head up display (HUD).

### BACKGROUND ART

For an intermediate film of curved trapezoidal or rectangular laminated glass for a vehicle front window, applied as a display member of a HUD, an intermediate film having substantially the same shape as the laminated glass, and having a thickness continuously (linearly) changed from the one side toward an opposite side, a so-called intermediate film having a wedge angle profile is used. In addition to the intermediate film having a wedge angle profile, use of a glass plate having a wedge angle profile is proposed (for example, Patent Literatures 7 to 9). The wedge angle profile is integrally molded in the laminated glass such that the thickness decreases in the longitudinal direction from the upper side to the lower side of the laminated glass, and the thickness in the horizontal direction of the laminated glass becomes constant, when the laminated glass is incorporated in a vehicle.

An imaging device that projects an image on the display member is provided in a dash board in front of a driver's seat, and therefore an imaging section of an image projected from the imaging device is reflected on an indoor-side glass surface of the laminated glass. At this time, on an outdoor-side glass surface of the laminated glass, a reflected image of the imaging section is reflected above the imaging section (for example, refer to Patent Literatures 1 and 2 as to explanation of an optical system). The surface of the laminated glass is inclined toward a driver, and therefore the driver is consequently likely to visually recognize a double image in the longitudinal direction from a lower side to an upper side. In a vehicle, a projected image is projected on the indoor-side glass surface from the lower side of the laminated glass, and therefore reduction of the double image has been attained by the laminated glass (for example, Patent Literatures 3 to 5).

However, recently, design of a vehicle is diversified and varied, and as a front window for a vehicle, the number of windows having large curvature also in the horizontal direction has been increasing. Therefore, as suggested in Patent Literature 6, the curvature in the horizontal direction influences appearance of a double image. Patent Literature 6 proposes the need for providing a wedge angle profile also in the horizontal direction of an intermediate film of laminated glass, and laminated glass provided with an intermediate film having a continuous nonlinear wedge angle profile in the vertical direction and the horizontal direction in a section of an intermediate film aims for reduction of the influence of the horizontal direction on the appearance of a double image.

### CITATION LIST

### - Patent Literature

Patent Literature 1: JP H2-279437 A
Patent Literature 2: JP H3-209210 A
Patent Literature 3: JP H07-508690 T
Patent Literature 4: JP H11-130481 A
Patent Literature 5: JP 2011-505330 T
Patent Literature 6: JP 2017-502125 T
Patent Literature 7: JP H7-195959 A
Patent Literature 8: WO/2016/121559
Patent Literature 9: JP 2017-105665 A

### SUMMARY OF INVENTION

### - Technical Problem

In the reduction of a double image in curved laminated glass for a vehicle front window, applied as the display member of the HUD, it is necessary to consider the influence of the curvature in the horizontal direction of glass, as described above. As proposed in Patent Literature 6, it appears that the reduction of the influence of the horizontal direction on the appearance of the double image is attained by practical use of the intermediate film.

However, in industrial production of laminated glass, the intermediate film is provided in a manner of roll. Therefore, in the wedge angle profile, the thickness continuously decreases from one side of the roll of an intermediate film original sheet to another side thereof (from an upper surface of a cylindrical object to an bottom surface thereof), and the thickness in the drawing-out direction of the roll has no choice but to become constant (conventionally, the constant thickness direction is disposed to be located in the horizontal direction, in laminated glass). In order to manufacture an intermediate film proposed in Patent Literature 4, the intermediate film original sheet is cut in a stripe shape from a roll and the cut film needs to be machined by press molding or the like so as to have a further wedge angle profile. Such machining is not only a factor of increase of cost of the laminated glass, but increases a risk of reduction of machining accuracy of an intermediate film surface resulting from complication of machining.

The present invention relates to a HUD obtained by using a front window for a vehicle as a display member, and an object of the present invention is to provide laminated glass using an intermediate film having a wedge angle profile that is capable of reducing a double image on the HUD resulting from the influence of the curvature in the longitudinal direction of the window as well as the curvature in the horizontal direction of the window, with a configuration allowing easy manufacturing.

### - Solution to Problem

Laminated glass of the present invention is laminated glass for a vehicle front window including: a curved first glass plate having a trapezoidal or rectangular shape; a second glass plate having the same shape as the first glass plate; and an intermediate film disposed between the first and second glass plates, an imaging section of an image being included in an indoor side surface of the laminated glass in a state in which the laminated glass is incorporated in a vehicle body, the image being projected from an imaging device incorporated in a dash board on a driver's seat side, the laminated glass being provided with a wedge angle profile in a longitudinal direction and a horizontal direction of the laminated glass, and having a thickness based on the wedge angle profile, the thickness continuously decreasing from an upper side to a lower side and continuously decreasing in a direction from a driver's seat side to a passenger seat side, and the laminated glass being further provided with a constant thickness profile only in one direction, wherein when an upper longitudinal direction from the imaging section is set to 0°, the one direction is an arbitrary angle of 270° (exclusive of 270°) to 360° (exclusive of 360°) by observation from inside of a vehicle in a case where a driver's seat is a right side seat (that is, in a case of a vehicle type of a right-hand steering wheel), and the one direction is an arbitrary angle of 0° (exclusive of 0°) to 90° (exclusive of 90°) by observation from the inside of the vehicle in a case where the driver's seat is a left side seat (that is, in a case of a vehicle type of a left-hand steering wheel).

A preferred laminated glass (first laminated glass) of the present invention is laminated glass for a vehicle front window including: a curved first glass plate having a trapezoidal or rectangular shape; a second glass plate having the same shape as the first glass plate; and an intermediate film disposed between the first and second glass plates, wherein an imaging section of an image projected from an imaging device incorporated in a dash board on a driver's seat side is included in an indoor side surface of the laminated glass in a state in which the laminated glass is incorporated in a vehicle body for the laminated glass, the intermediate film is provided with a wedge angle profile in the longitudinal direction and the horizontal direction of the laminated glass, a thickness of the intermediate film based on the wedge angle profile continuously decreases from a upper side to a lower side, and continuously decreases in the direction from the driver's seat side to the passenger seat side, and the intermediate film is further provided with a constant thickness profile only in one direction, and when an upper longitudinal direction from the imaging section is set to 0°, the one direction is an arbitrary angle of 270° (exclusive of 270°) to 360° (exclusive of 360°) by observation from inside of the vehicle in a case where the driver's seat is the right side seat (that is, in a case of a vehicle type of a right-hand steering wheel), and the one direction is an arbitrary angle of 0° (exclusive of 0°) to 90° (exclusive of 90°) by observation from the inside of the vehicle in a case where the driver's seat is the left side seat (that is, in a case of a vehicle type of a left-hand steering wheel).

Another preferred laminated glass (second laminated glass) is laminated glass for a vehicle front window including: a curved first glass plate having a trapezoidal or rectangular shape; a second glass plate having the same shape as the first glass plate; and an intermediate film disposed between the first and second glass plates, wherein an imaging section of an image projected from an imaging device incorporated in a dash board on a driver's seat side is included in an indoor side surface of the laminated glass in a state in which the laminated glass is incorporated in a vehicle body for the laminated glass, at least one selected from a group consisting of the first glass plate and the second glass plate is provided with a wedge angle profile in the longitudinal direction and the horizontal direction of the laminated glass, a thickness of the glass plate provided with the wedge angle profile (hereinafter, represented by a "wedge glass plate"), the thickness being based on the wedge angle profile, continuously decreases from an upper side to a lower side, and continuously decreases in the direction from the driver's seat side to the passenger seat side, and the glass plate is further provided with a constant thickness profile only in one direction, and when an upper longitudinal direction from the imaging section is set to 0°, the one direction is an arbitrary angle of 270° (exclusive of 270°) to 360° (exclusive of 360°) by observation from inside of the vehicle in a case where the driver's seat is the right side seat (that is, in a case of a vehicle type of a right-hand steering wheel), and the one direction is an arbitrary angle of 0° (exclusive of 0°) to 90° (exclusive of 90°) by observation from the inside of the vehicle in a case where the driver's seat is the left side seat (that is, in a case of a vehicle type of a left hand steering wheel).

The laminated glass is provided with the wedge angle profile in the longitudinal direction and the horizontal direction of the laminated glass, and has a structure in which the thickness based on the wedge angle profile continuously decreases from the upper side to the lower side, and continuously decreases in the direction from the driver's seat side to the passenger seat side. Therefore, it is possible to attain reduction of a double image in these directions. In the first laminated glass, the intermediate film has the constant thickness profile in the one direction, and therefore risk of reduction in machining accuracy of an intermediate film surface resulting from complication of machining of the intermediate film is reduced.

The direction in which the profile of the thickness of the laminated glass is constant may influences the double image on the HUD. However, in the laminated glass of the present invention, the imaging section of the image projected from the imaging device incorporated in the dash board on the driver's seat side is included in the indoor side surface of the laminated glass, in the state in which the laminated glass is incorporated in the vehicle body for the laminated body. Therefore, as to appearance of the double image, the direction that influences the curvature in the horizontal direction of the laminated glass is the lateral side direction near the laminated glass. When the upper longitudinal direction from the imaging section is set to 0°, the direction with the constant thickness profile is an arbitrary angle of 270° (exclusive of 270°) to 360° (exclusive of 360°) by observation from inside of the vehicle in a case where the driver's seat is the right side seat, and the one direction is an arbitrary angle of 0° (exclusive of 0°) to 90° (exclusive of 90°) by observation from the inside of the vehicle in a case where the driver's seat is the left side seat. Therefore, any problem of the double image does not occur in this direction.

The constant thickness profile in the present invention means that the both principal surfaces have parallel positional relation to the degree where any wedge angle profile does not occurs.

### - Advantageous Effects of Invention

The laminated glass for a vehicle front window of the present invention is easily manufactured. When the laminated glass for vehicle front window is used as a display member of a HUD, reduction of influence not only of the longitudinal direction but also of the horizontal direction on the appearance of a double image is attain.

### BRIEF DESCRIPTION OF DRAWINGS

FIG. 1 is a figure illustrating a principal part when laminated glass of the present invention, incorporated as a front window in a vehicle body, is observed from the front side of the vehicle;
FIG. 2 is a figure related to laminated glass of the present invention, and illustrating relation among the laminated glass used as a display member of a HUD, an imaging device that projects an image on the display member, an imaging section of the image projected from the imaging device, and a virtual image visually recognized by an observer, as viewed from a-a' cross-section of FIG. 1;
FIG. 3 schematically illustrates a state in which an intermediate film original sheet is drawn out from a roll of the intermediate film original sheet;
FIG. 4A and FIG.4B are figures schematically illustrating a principal part of an optical system for evaluating a characteristic of the laminated glass as the display member of the HUD;
FIG. 5 is a figure schematically illustrating a principal part of a state of molding of a glass basis material at the time of obtaining a wedge glass plate, by a float glass process; and
FIG. 6 is a figure schematically illustrating a portion to be cut out as the wedge glass plate, from an original plate of the wedge glass plate.

### DESCRIPTION OF EMBODIMENTS

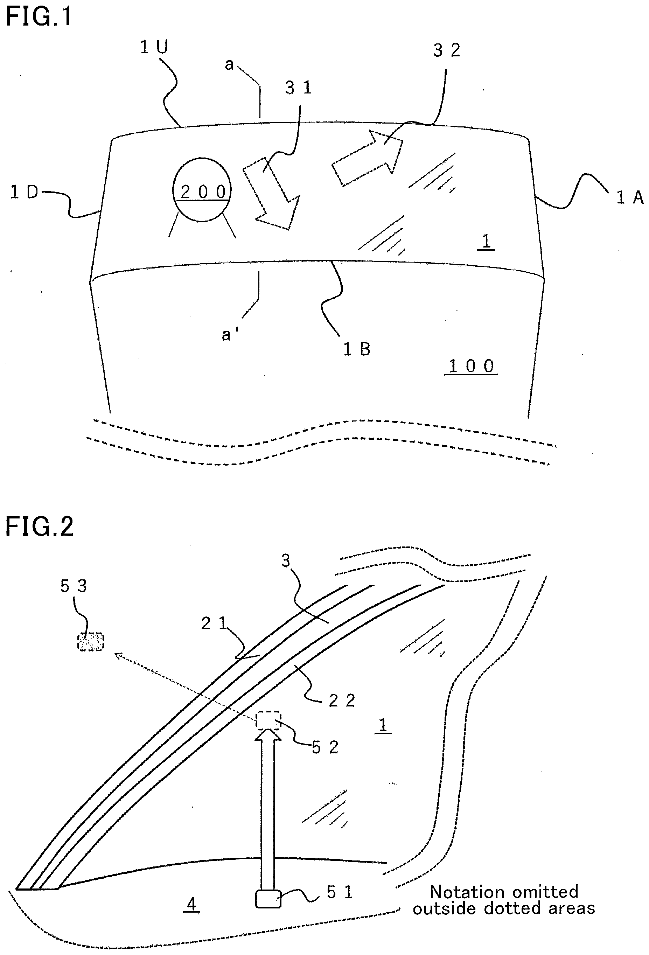

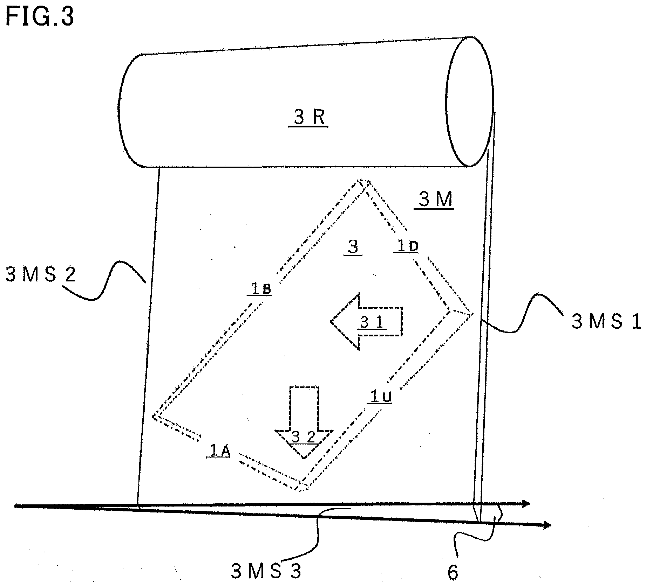

Laminated glass of the present invention will be described with reference to the drawings. FIG. 1 is a figure illustrating a principal part when laminated glass 1 of the present invention, incorporated as a front window in a vehicle, is observed from the front side of the vehicle body 100. FIG. 2 is a figure related to laminated glass of the present invention, and illustrating relation among the laminated glass used as a display member of a HUD, an imaging device 51 that projects an image on the display member, an imaging section 52 of the image projected from the imaging device 51, and a virtual image 53 visually recognized by an observer (driver) 200, as viewed from a-a' cross-section of FIG. 1. FIG. 3 schematically illustrates a state in which an intermediate film original sheet 3M is drawn out from a roll 3R of the intermediate film original sheet, and illustrates a region that becomes an intermediate film 3 of the laminated glass 1, from the intermediate film original sheet 3M, the region illustrated by a dashed line in the figure. Additionally, FIG. 3 illustrates sides equivalent to an upper side 1U, a lower side 1B, a lateral side 1D on a driver's seat, a lateral side 1A on a passenger seat side of laminated glass 1. When a lateral side 3MS3 that is an end face in the drawing-out direction of the intermediate film original sheet 3M (rectangle in plan view) is viewed, both principal surfaces of the original sheet 3M are nonparallel, and therefore an angle 6 occurs. A profile of the thickness in the drawing-out direction of the intermediate film original sheet 3M from the roll 3R is constant. The angle 6 becomes a maximum angle, as viewed from every direction except the drawing-out direction.

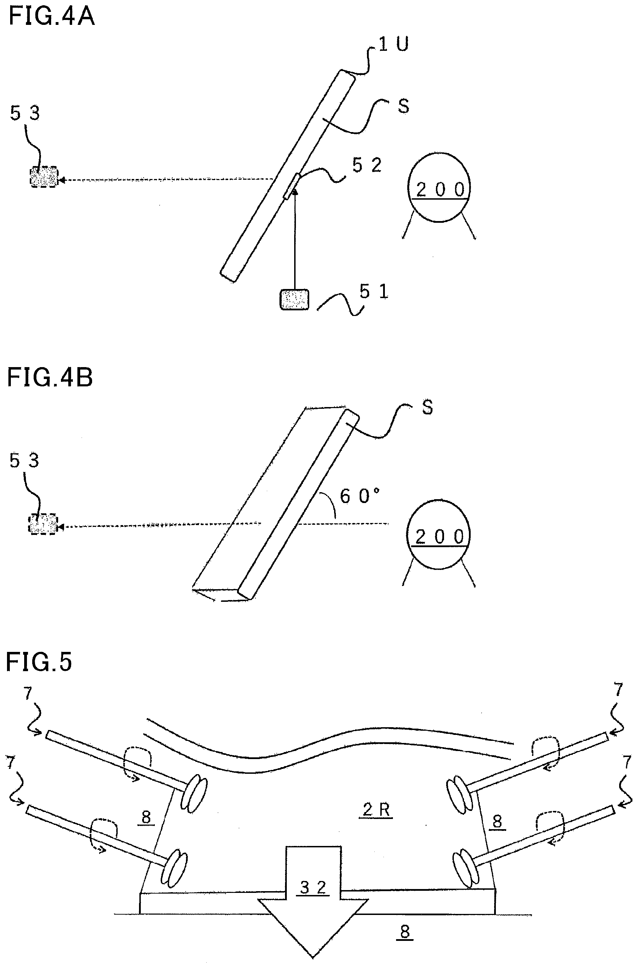

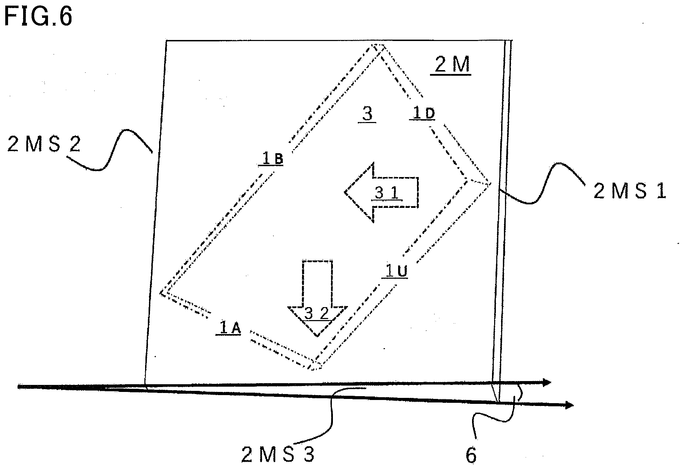

FIG. 5 is a figure schematically illustrating a principal part of a state of molding of a glass basis material at the time of obtaining a wedge glass plate, by a float glass process, and FIG. 6 is a figure schematically illustrating a portion to be cut out as the wedge glass plate, from an original plate of the wedge glass plate. A region that becomes a first glass plate 21 or a second glass plate 22 of the laminated glass 1 from an original plate 2M of the wedge glass plate is illustrated by a dashed line in the drawing. In addition to the region, FIG. 6 illustrates sides equivalent to an upper side 1U, a lower side 1B, a lateral side 1D on a driver's seat, a lateral side 1A on a passenger seat side of laminated glass 1. When a lateral side 2MS3 that is an end face in the direction (direction in which a glass basis material 2R flows by a float glass process) of the direction 32 of the original plate 2M (rectangle in plan view) is viewed, both principal surfaces of the original plate 2M are nonparallel, and therefore an angle 6 occurs. A profile of the thickness in the direction 32 is constant. The angle 6 becomes a maximum angle, as viewed from every direction except the direction 32.

The laminated glass 1 is the laminated glass 1 for a front window of a vehicle including the curved first glass plate 21 having a trapezoidal or rectangular shape, the second glass plate 22 having the same shape as the first glass plate, and the intermediate film 3 disposed between the first and second glass plates. In a state in which the laminated glass 1 is incorporated in the vehicle body 100, the first glass plate 21 is disposed on an outdoor side, and the second glass plate 22 is disposed on an indoor side.

In the state in which the laminated glass 1 is incorporated in the vehicle body 100, the imaging section 52 of the image projected from the imaging device 51 incorporated in the dash board 4 on the driver's seat side is included in an indoor side surface of the second glass plate 22, and furthermore, the intermediate film 3 is provided with a wedge angle profile that continuously decreases in thickness in the obliquely downward direction (in the direction 31 illustrated by a broken arrow in FIG. 1) from the upper side 1U to the lower side 1B. The wedge angle that occurs in this direction becomes a maximum angle in the intermediate film 3. The direction orthogonal to this direction (in the direction 32 illustrated by a broken arrow in FIG. 1) is the drawing-out direction (length direction) of the intermediate film original sheet 3M, and therefore is a constant thickness profile. When the upper longitudinal direction from the imaging section 52 is 0°, the constant thickness profile direction is an arbitrary angle of 270° (exclusive of 270°) to 360° (exclusive of 360°) in a case where a driver's seat is a right side seat as viewed in the traveling direction of the vehicle, and an arbitrary angle of 0° (exclusive of 0°) to 90° (exclusive of 90°) in a case where the driver's seat is a left side seat as viewed in the traveling direction of the vehicle, by observation from the inside of a vehicle.

FIG. 1 illustrates a case in which the driver's seat of the vehicle body 100 is the right side seat, and in a case in which the driver's seat of the vehicle body 100 is the left side seat, each configuration illustrated in FIG. 1 is left and right opposite arrangement.

As the glass plates 21, 22, a glass plate made of soda lime silicate glass regulated by ISO16293-1, manufactured by a float glass process and widely used as a glass plate for a vehicle can be used. Colorless or colored glass can be used. The glass plates 21, 22 each have a curved trapezoidal or rectangular shape, and each include the upper side 1U, the lateral side 1D on the driver's seat side, the lateral side 1A on the passenger seat side, and the lower side 1B. Each side is a cut section formed by cutting out each of the glass plates 21, 22 from a glass plate larger than each glass plate, and the cut section may be grinded or polished. The curved glass plates 21, 22 each are obtained by molding by heating a flat glass plate that is cut out in a predetermined size up to the vicinity of a softening point. The molding includes self-weight bending or press molding. The thickness of each glass plate may be appropriately selected in a range of, for example, 0.4 to 4 mm. As each of the glass plates 21, 22 used in the first laminated glass 1, a glass plate having both principal surface parallel to each other is used.

Other examples of glass to be used in the glass plates 21, 22 include respective plastic glasses made of polyethylene terephthalate resin, polycarbonate resin, polycarbonate resin, PVC resin, polyethylene resin, and the like.

The intermediate film 3 is made of a polymer material having thermoplasticity, and as the polymer material, cycloolefin polymer (COP), polyurethane (PUR), ethylene/vinyl acetate (EVA), polyvinyl butyral (PVB), or the like can be used, PVB can be particularly preferably used. The refractive index in a visible light region of the intermediate film 3 is preferably equivalent to the glass plates 21, 22. Preferably, the intermediate film 3 is cut out from the intermediate film original sheet 3M so as to be provided with a wedge angle profile in the longitudinal direction IV and the horizontal direction of the laminated glass 1, and the thickness of an intermediate film based on the wedge angle profile is continuously reduced from the upper side to the lower side, and continuously reduced in the direction from the driver's seat side to the passenger seat side.

Now, the first laminated glass 1 will be described in detail. In the intermediate film original sheet 3M that is a raw material of the intermediate film of the first laminated glass 1, as illustrated in FIG. 3, the both principal surfaces of the intermediate film original sheet are nonparallel, and the thickness profile in the drawing-out direction of the roll is constant. The both principal surfaces of the intermediate film original sheet are nonparallel, and therefore the thickness continuously decreases from a lateral side 3MS1 toward another lateral side 3MS2 of the intermediate film original sheet 3M. In FIG. 3, the wedge angle profile forming the angle 6 is illustrated by two arrows illustrated on the lower side in FIG. 3.

In a case in which the driver's seat of the vehicle body 100 is the right side seat, the direction of the wedge angle profile forming the angle 6 is the direction 31 illustrated in FIG. 1 (FIG. 3). As a result, the wedge angle profile can be provided in the longitudinal direction and the horizontal direction of the laminated glass 1. In order to understand these positional relations well, detailed description will be made with reference to FIG. 3. In the intermediate film original sheet 3M, the thickness continuously decreases in the vertical direction from the lateral side 3MS1 to the lateral side 3MS2, and the thickness increases toward the 3MS1 side. Therefore, the intermediate film original sheet 3M includes the wedge angle profile as illustrated by the two arrows on the lower side in FIG. 3. In the laminated glass 1, the wedge angle profile in the direction 31 is equivalent to a wedge angle profile in which the thickness continuously decreases in the vertical direction from the lateral side 3MS1 to the lateral side 3MS2 of the intermediate film original sheet 3M.

As easily understood from FIG. 3, the direction from the upper side 1U to the lower side 1B, that is, the longitudinal direction of the laminated glass 1 is the direction in which the thickness of the intermediate film 3 continuously decreases. The direction from the lateral side 1D to the lateral side 1A, that is, the horizontal direction of the laminated glass 1 is the direction in which the thickness of the intermediate film 3 continuously decreases. On the other hand, the intermediate film original sheet 3M does not change the thickness in such a direction as to be drawn out from the roll 3R. Therefore, in the laminated glass 1, the profile of the thickness in the direction 32 becomes constant. The laminated glass may have a zone in which the profile of the thickness in the direction 31 from the lateral side 3MS1 or 3MS2 is constant. In a case in which the intermediate film 3 includes the zone, the intermediate film 3 may be cut out from the intermediate film original sheet 3M such that the zone does not include the imaging section 52.

In the HUD that uses the first laminated glass 1, a projected image is projected upward as illustrated by a solid line of FIG. 2, from the imaging device 51 incorporated in the dash board 4. Then, the imaging section 52 is formed on the indoor side surface of the laminated glass 1 (glass plate 22), and the virtual image 53 of the imaging section 52 is observed by an observer 200 as a driver. In suppression of a double image of a virtual image visually recognized by the observer 200, suppression of the double image in the imaging section 52 is important.

In a front window of a vehicle, while the first laminated glass 1 is provided with a wedge angle profile not only in the longitudinal direction but also in the horizontal direction, the profile of the thickness in the direction 32 of the intermediate film is constant. In the case of the front window for a vehicle including the laminated glass 1, even when the curvature in the horizontal direction of the laminated glass influences appearance of the double image, the direction of the influence becomes the lateral side direction near the driver's seat of the laminated glass, that is, in the direction of the lateral side 1D. Accordingly, even when the profile of the thickness of the intermediate film in the diagonal direction of the oblique direction is constant, a problem of a double image does not occur in the direction 32.

In the laminated glass 1, when the upper longitudinal direction from the imaging section is 0°, the direction 32 is an arbitrary angle of 270° (exclusive of 270°) to 360° (exclusive of 360°) in a case where a driver's seat is a right side seat as viewed in the traveling direction of the vehicle, and is an arbitrary angle of 0° (exclusive of 0°) to 90° (exclusive of 90°) in a case where the driver's seat is a left side seat as viewed in the traveling direction of the vehicle, by observation of the laminated glass from the inside of the vehicle.

Furthermore, in the former case, these angle ranges may be preferably an arbitrary angle of 273° to 305°, more preferably an arbitrary angle of 275° to 300°. On the other hand, in the latter case, these angle ranges may be preferably an arbitrary angle of 55° to 87°, more preferably an arbitrary angle of 60° to 85°. In these angle ranges more restricted, in a case in which the intermediate film original sheet 3M illustrated in FIG. 3 is used, compatibility of ease of manufacturing of the laminated glass, and double image reduction of the HUD are easily attained. From a similar viewpoint, in the laminated glass 1, a wedge angle in the orthogonal direction (direction 31) to the one direction is preferably a maximum angle in the intermediate film. This angle is represented as the angle 6 represented on the lateral side 3MS3 side that becomes the end face in the drawing-out direction of the intermediate film original sheet 3M, in FIG. 3. This angle 6 is preferably 0.1 mrad to 1.4 mrad. In a case in which this angle is less than 0.1 mrad, an effect of double image suppression in the longitudinal direction of the laminated glass 1 is reduced. On the other hand, in a case in which the angle 6 exceeds 1.4 mrad, difference in the thickness of the laminated glass between the upper side 1U and the lower side occurs, and therefore efficiency when the laminated glass 1 is assembled to the vehicle body is lowered. Considering these, the angle 6 may be 0.3 mrad to 1.2 mrad. In the laminated glass 1, the thickness of the intermediate film 3 in an area of a maximum thickness may be 0.8 mm to 2.2 mm.

A manufacturing method of the first laminated glass 1 preferably includes a step A of preparing a curved first glass plate having a trapezoidal or rectangular shape, and a second glass plate having the same shape as the first glass plate, a step B of preparing a long intermediate film original sheet that has a wedge angle profile with a thickness continuously decreasing in the direction from one of lateral sides to an opposite lateral side, that has both principal surfaces nonparallel to each other, and that has a constant thickness profile in the length direction, a step C of preparing an intermediate film that is a trapezoidal or rectangular shape intermediate film that is cut out from the sheet, that is provided with a wedge angle profile in the longitudinal direction and the horizontal direction of the laminated glass, that has a thickness of the intermediate film based on the wedge angle profile, the thickness continuously decreasing from the upper side to the lower side and continuously decreasing in the direction from the driver's seat side to the passenger seat side, the intermediate film being further provided with a constant thickness profile only in one direction, and a step D of interposing the intermediate film between the first glass plate and the second glass plate.

Another aspect of a manufacturing method of the first laminated glass 1 may include a step E of preparing a curved first glass plate having a trapezoidal or rectangular shape, and a second glass plate having the same shape as the first glass plate, a step F of preparing a long intermediate film original sheet that has a wedge angle profile with a thickness continuously decreasing in the direction from one of lateral sides to an opposite lateral side, that has both principal surfaces nonparallel to each other, and that has a constant thickness profile in the length direction, a step G of interposing the sheet between the first glass plate and the second glass plate, a step F of cutting an intermediate film from the sheet interposed between the first glass plate and the second glass plate, the intermediate film being a trapezoidal or rectangular shape intermediate film, being provided with a wedge angle profile in the longitudinal direction and the horizontal direction of the laminated glass, and having a thickness of intermediate film based on the wedge angle profile, the thickness continuously decreasing from the upper side to the lower side and continuously decreasing in the direction from the driver's seat side to the passenger seat side, the intermediate film being provided with a constant thickness profile only in the one direction. From a viewpoint of manufacturing efficiency of the laminated glass 1, the intermediate film 3 is cut out after being drawn out from the roll 3R of intermediate film original sheet 3M, and the both principal surfaces of the intermediate film original sheet may be nonparallel, and the thickness profile in the drawing-out direction of the roll may be constant. Furthermore, the intermediate film original sheet 3M may be stretched in the direction from the lateral side 3MS1 to the lateral side 3MS2, so that the angle 6 may be adjusted.

After the step C, while the first glass plate 21, 22, and the intermediate film 3 are thermo compressed, for example, a laminated body of the first glass plate 21, the intermediate film 3, and the second glass plate 22 is pressurized at 1.0 to 1.5 MPa, the laminated body is held at 100°C to 150°C for 15 to 60 minutes, so that the laminated glass 1 can be manufactured. Before thermocompression bonding, a space between the intermediate film 3 and each of the glass plates 21, 22 may be deaerated.

Now, the second laminated glass 1 will be described in detail. In this laminated glass, at least one selected from a group consisting of the first glass plate and the second glass plate has a wedge angle profile which has a thickness continuously decreasing in the direction from one lateral side to an opposite lateral side, has both principal surfaces nonparallel to each other, and has a constant thickness profile in one direction. That is, a wedge glass plate is used. Both the first glass plate 21 and the second glass plate 22 may be wedge glass plates. However, considering that the directions 32 of both the glass plates are matched, the wedge glass plate may be used for either the first glass plate 21 or the second glass plate 22. In the second laminated glass 1, both the principal surfaces of the intermediate film 3 are parallel to each other.

The wedge glass plate is obtained by devising a condition when the glass plate is manufactured by a float glass process. FIG. 5 is a figure schematically illustrating a principal part of a state of molding of a glass basis material at the time of obtaining a wedge glass plate, by a float glass process. In the float glass process, a molten glass basis material 2R flows on a molten metal bath 8 made of molten tin or the like, a plurality of rolls 7 disposed in both ends of the bath 8 is rotated in the directions of dotted arrows, and the glass basis material 2R is molded. The glass basis material 2R flows in the direction of an arrow D3 directed downward on the bath 8. The peripheral speed when each roll 7 rotates is adjusted, so that the thickness of the glass basis material fluctuates in the width direction of the glass basis material 2R, and the original plate 2M of the wedge glass plate is obtained. For example, it is possible to obtain a glass plate having such a concave profile that the thickness of the center in the width direction of the glass basis material 2R is a minimum thickness, a plate having such a protruding profile that the thickness of the center in the width direction of the glass basis material 2R is a maximum thickness, or the like.

As illustrated in FIG. 6, the original plate 2M obtained by the fluctuation in the width direction of the glass basis material 2R has a profile in which the thickness continuously decreases in the direction 31 from a right lateral side 2MS1 to a left lateral side 2MS2, and furthermore, a thickness profile is constant in the direction 32. As easily understood from FIG. 6, the thickness of the glass plate continuously decreases in the direction from the upper side 1U to the lower side 1B, that is, the longitudinal direction of the laminated glass 1. The thickness of the glass plate continuously decreases in the direction from the lateral side 1D to the lateral side 1A, that is, in the horizontal direction of the laminated glass 1. On the other hand, the thickness in the direction 32 (direction in which the glass basis material 2R flows) of the original plate 2M does not change. Therefore, in the laminated glass 1, the profile of the thickness in the direction 32 is constant. A zone in which the profile of the thickness in the direction 31 from the lateral side 2MS1 or the 2MS2 is constant may be provided. In a case in which the intermediate film 3 includes the zone, a wedge glass plate may be cut out from the original plate 2M such that the zone does not include the imaging section 52.

In a HUD using the second laminated glass 1, a projected image is projected upward from the imaging device 51 incorporated in the dash board 4 as illustrated by a solid line of FIG. 2. Then, an imaging section 52 is formed on the indoor side surface of the laminated glass 1 (glass plate 22), and a virtual image 53 of imaging section 52 is observed by an observer 200 as a driver. In suppression of the double image of the virtual image visually recognized by the observer 200, suppression of the double image in the imaging section 52 is important.

In the second laminated glass 1, in a front window for a vehicle, while the wedge angle profile is provided not only in the longitudinal direction but also in the horizontal direction, the profile of the thickness in the direction 32 of the intermediate film becomes constant. In a case of the front window for the vehicle composed of the laminated glass 1, even when the curvature in the horizontal direction of the laminated glass influences appearance of a double image, the direction that gives the influence becomes the lateral side direction on the side near the driver's seat of the laminated glass, that is, the direction on the side of the lateral side 1D. Accordingly, even when the profile of the thickness of the intermediate film in the diagonal direction of the oblique direction is constant, a problem of a double image does not occur in the direction 32.

In the laminated glass 1, when the upper longitudinal direction from the imaging section is 0°, the direction 32 is an arbitrary angle of 270° (exclusive of 270°) to 360° (exclusive of 360°) in a case where the driver's seat is a right side seat as viewed in the traveling direction of the vehicle, and is an arbitrary angle of 0° (exclusive of 0°) to 90° (exclusive of 90°) in a case where the driver's seat is a left side seat as viewed in the traveling direction of the vehicle, by observation of the laminated glass 1 from the vehicle inner surface.

Furthermore, in the former case, these angle ranges may be preferably an arbitrary angle of 273° to 305°, more preferably an arbitrary angle of 275° to 300°. On the other hand, in the latter case, these angle ranges may be preferably an arbitrary angle of 55° to 87°, more preferably an arbitrary angle of 60° to 85°. In these angle ranges more restricted, in a case in which the original plate 2M illustrated in FIG. 6 is used, compatibility of ease of manufacturing of the laminated glass, and double image reduction of the HUD are easily attained. From a similar viewpoint, in the laminated glass 1, a wedge angle in the orthogonal direction (direction 31) to the one direction is preferably a maximum angle in the intermediate film. This angle is represented as the angle 6 represented on the lateral side 3MS3 side that becomes the end face in the drawing-out direction of the intermediate film original 3M, in FIG. 3. This angle 6 is preferably 0.1 mrad to 1.4 mrad. In a case in which this angle is less than 0.1 mrad, an effect of double image suppression in the longitudinal direction of the laminated glass 1 is reduced. On the other hand, in a case in which the angle 6 exceeds 1.4 mrad, difference in the thickness of the laminated glass between the upper side 1U and the lower side occurs, and therefore efficiency when the laminated glass 1 is assembled to the vehicle body is lowered. Considering these, the angle 6 may be 0.3 mrad to 1.2 mrad. In the laminated glass 1, the thickness of the intermediate film 3 in an area of a maximum thickness may be 0.8 mm to 2.2 mm.

A preferred manufacturing method of the second laminated glass 1 includes a step A of preparing a curved first glass plate having a trapezoidal or rectangular shape, and a second glass plate having the same shape as the first glass plate, a step F of preparing an intermediate film having both principal surfaces parallel to each other, and a step D of interposing the intermediate film between the first glass plate and the second glass plate, wherein at least one selected from a group consisting of the first glass plate and the second glass plate has a wedge angle profile that has a thickness continuously decreasing in the direction from one lateral side to an opposite lateral side, and both principal surfaces of the glass plate are nonparallel, and the thickness profile in one direction is constant.

### EXAMPLES

The laminated glass of the present invention will be described in each of examples and comparative examples.

### 1. Preparation of Sample

Flat glass plates each composed of soda lime silicate glass manufactured by a float glass process, and each having a 300 mm × 300 mm square (thickness of 2.0 mm), and a roll 3R of an intermediate film original sheet 3M composed of a PVB (thickness of 0.7 mm) and having the same size as each glass plate were prepared. This intermediate film original sheet 3M includes a thickness profile that is constant in the drawing-out direction (equivalent to the direction 32) of the original sheet 3M, and a wedge angle profile that has a thickness continuously decreasing in orthogonal direction (equivalent to the direction 31) from the lateral side 3MS1 to the lateral side 3MS2. The angle 6 is 1.0 mrad.

A sheet having a 300 mm × 300 mm square was cut out from the original sheet 3M to obtain the intermediate film 3. In each of the examples and the comparative examples, the intermediate film 3 was cut out from the original sheet 3M under the following condition.
Example 1: In the laminated glass 1, in an optical system described in the following 2, an intermediate film 3 was cut out such that the direction 32 had an angle of 275° and an angle formed by an upper side 1U of the intermediate film 3 and a lateral side 3MS1 of an original sheet 3MS is 5°.
Example 2: In the laminated glass 1, in an optical system described in the following 2, an intermediate film 3 was cut out such that the direction 32 had an angle of 280° and an angle formed by an upper side 1U of the intermediate film 3 and a lateral side 3MS1 of an original sheet 3MS is 10°.
Example 3: In the laminated glass 1, in an optical system described in the following 2, an intermediate film 3 was cut out such that the direction 32 had an angle of 290° and an angle formed by an upper side 1U of the intermediate film 3 and a lateral side 3MS1 of an original sheet 3MS is 10°.

Comparative Example 1: An intermediate film 3 was cut out such that an upper side 1U (lower side 1B) of an intermediate film sheet 3 was parallel to a lateral side 3MS1 (3MS2) of an original sheet 3M. In the comparative example 1, in an optical system described in the following 2, the direction 32 had an angle of 270°.

Each intermediate film 3 was disposed between the two flat glass plates such that the respective sides of each glass plates were along the sides of the intermediate film 3, so that a laminated body was obtained. Then, the laminated body was heated, so that a laminated glass S of each of the examples and comparative examples was produced.

In the optical system described in the following 2, an example in which an indoor side surface of the laminated glass S of Example 1 was an outdoor side surface was Comparative Example 2, an example in which an indoor side surface of the laminated glass S of Example 2 was an outdoor side surface was Comparative Example 3, and an example in which an indoor side surface of the laminated glass S of Example 3 was an outdoor side surface was Comparative Example 4. The respective directions 32 of Comparative Examples 2, 3 and 4 were 85°, 80° and 70°.

### 2. Double Image Evaluation in HUD Using Laminated Glass S

An optical system illustrated in FIG. 4A and FIG. 4B was prepared in order to evaluate a double image. FIG. 4A illustrates a principal part when the optical system is observed from a lateral side, and FIG. 4B illustrates a principal part when the optical system is observed from an upper side. A projected image is projected on the laminated glass S inclined at 60° with respect to the horizontal direction above the imaging device 51 such that the upper side 1U is located on the upper side. The observer 200 observes the virtual image 53 on the imaging section 52 generated on an observer-side surface of the laminated glass 1. The laminated glass S is disposed in the observing direction of the observer 200, that is, so as to be inclined at 75° with respect to the direction of a broken arrow in FIG. 4B. In this optical system, the former and the latter angles are set for simulation such that the laminated glass 1 of the present invention incorporated in the vehicle body 100 can be evaluated by the flat laminated glass.

A double image evaluation result in this optical system is represented in Table 1. In Table 1, the evaluation result of the double image indicates a result obtained by measuring a difference between a position of an original image to be observed, and a position of a double image, by an absolute value. In Examples 1, 2, 3, improvement of the double image is seen not only in the longitudinal direction of the laminated glass, but also in the horizontal direction of the laminated glass.

| | Example 1 | Example 2 | Example 3 | Comparative Example 1 | Comparative Example 2 | Comparative Example 3 | Comparative Example 4 |
|---|---|---|---|---|---|---|---|
| Double image in longitudinal direction | 0.1 mm | 0.1 mm | 0.1 mm | 0.1 mm | 0.1 mm | 0.1 mm | 0.2 mm |
| Double image in horizontal direction | 0.3 mm | 0.2 mm | 0.0 mm | 0.4 mm | 0.5 mm | 0.6 mm | 0.9 mm |

### REFERENCE SIGNS LIST

1 laminated glass
1U upper side of laminated glass
1B lower side of laminated glass
1D lateral side on driver's seat side of laminated glass
1A lateral side on passenger seat side of laminated glass
21 first glass plate
22 second glass plate
3 intermediate film
31 oblique direction in direction from driver's seat side to passenger seat side, from upper side 1U
32 diagonal direction of direction 31
4 dash board
51 imaging device for projecting image on display member (laminated glass)
52 imaging section of image projected on display member (laminated glass)
53 virtual image visually recognized by observer (driver)
100 vehicle body
200 observer (driver)

## Claims

1. Laminated glass for a vehicle front window, comprising:
a curved first glass plate having a trapezoidal or rectangular shape;
a second glass plate having the same shape as the first glass plate; and
an intermediate film disposed between the first and second glass plates,
the laminated glass being provided with an imaging section of an image projected from an imaging device incorporated in a dash board on a driver's seat side in an indoor side surface of the laminated glass, in a state in which the laminated glass is incorporated in a vehicle body,
the laminated glass being provided with a wedge angle profile in a longitudinal direction and a horizontal direction of the laminated glass, and having a thickness based on the wedge angle profile, the thickness continuously decreasing from an upper side to a lower side and continuously decreasing in a direction from a driver's seat side to a passenger seat side, and the laminated glass being further provided with a constant thickness profile only in one direction,
wherein when an upper longitudinal direction from the imaging section is set to 0°, the one direction is an arbitrary angle of 270° (exclusive of 270°) to 360° (exclusive of 360°) by observation from inside of a vehicle in a case where a driver's seat is a right side seat, and the one direction is an arbitrary angle of 0° (exclusive of 0°) to 90° (exclusive of 90°) by observation from the inside of the vehicle in a case where the driver's seat is a left side seat.

2. The laminated glass according to claim 1,
wherein the intermediate film is provided with a wedge angle profile in the longitudinal direction and the horizontal direction of the laminated glass, a thickness of the intermediate film based on the wedge angle profile continuously decreases from an upper side to a lower side, and continuously decreases in the direction from the driver's seat side to the passenger seat side, and the intermediate film is further provided with a constant thickness profile only in one direction, and
when an upper longitudinal direction from the imaging section is set to 0°, the one direction is an arbitrary angle of 270° (exclusive of 270°) to 360° (exclusive of 360°) by observation from inside of the vehicle in a case where the driver's seat is the right side seat, and the one direction is an arbitrary angle of 0° (exclusive of 0°) to 90° (exclusive of 90°) by observation from the inside of the vehicle in a case where the driver's seat is the left side seat.

3. The laminated glass according to claim 2,
wherein the wedge angle profile is provided in an orthogonal direction to the one direction, and the wedge angle in the orthogonal direction is a maximum angle in the intermediate film.

4. The laminated glass according to claim 3,
wherein the wedge angle in the orthogonal direction is 0.1 to 1.4 mrad.

5. The laminated glass according to claim 1,
wherein at least one selected from a group consisting of the first glass plate and the second glass plate is provided with a wedge angle profile in the longitudinal direction and the horizontal direction of the laminated glass,
a thickness of the glass plate provided with the wedge angle profile, the thickness being based on the wedge angle profile, continuously decreases from an upper side to a lower side, and continuously decreases in the direction from the driver's seat side to the passenger seat side, and the glass plate is further provided with a constant thickness profile only in one direction, and
when an upper longitudinal direction from the imaging section is set to 0°, the one direction is an arbitrary angle of 270° (exclusive of 270°) to 360° (exclusive of 360°) by observation from inside of the vehicle in a case where the driver's seat is the right side seat, and the one direction is an arbitrary angle of 0° (exclusive of 0°) to 90° (exclusive of 90°) by observation from the inside of the vehicle in a case where the driver's seat is the left side seat.

6. The laminated glass according to claim 5,
wherein the wedge angle profile is provided in an orthogonal direction to the one direction, and the wedge angle in the orthogonal direction is a maximum angle in the glass plate provided with the wedge angle profile.

7. The laminated glass according to claim 6,
wherein the wedge angle in the orthogonal direction is 0.1 mrad to 1.4 mrad.

8. The laminated glass according to any one of claims 1 to 7,
wherein the one direction is an arbitrary angle of 273° to 330° in a case where the driver's seat is the right side seat when viewing in an traveling direction of the vehicle, and the one direction is an arbitrary angle of 60° to 87° in a case where the driver's seat is the left side seat when viewing in the traveling direction of the vehicle.

9. A manufacturing method for the laminated glass according to any one of claims 1 to 4, and 8, the manufacturing method for the laminated glass comprising:
a step A of preparing a curved first glass plate having a trapezoidal or rectangular shape, and a second glass plate having the same shape as the first glass plate;
a step B of preparing a long intermediate film original sheet that has a wedge angle profile with a thickness continuously decreasing in a direction from one of lateral sides to an opposite lateral side of the long intermediate film original sheet, that has both principal surfaces nonparallel to each other, and that has a constant thickness profile in a length direction;
a step C of preparing an intermediate film that is a trapezoidal or rectangular shape intermediate film that is cut out from the sheet, that is provided with a wedge angle profile in the longitudinal direction and the horizontal direction of the laminated glass, that has a thickness based on the wedge angle profile, the thickness continuously decreasing from the upper side to the lower side, and continuously decreasing in the direction from the driver's seat side to the passenger seat side, the intermediate film being further provided with a constant thickness profile only in one direction; and
a step D of interposing the intermediate film between the first glass plate and the second glass plate.

10. A manufacturing method for the laminated glass according to any one of claims 1 to 4, and 8, the manufacturing method for the laminated glass comprising:
a step E of preparing a first glass plate having a trapezoidal or rectangular shape, and a second glass plate having the same shape as the first glass plate;
a step F of preparing a long intermediate film original sheet that has a wedge angle profile with a thickness continuously decreasing in a direction from one of lateral sides to an opposite lateral side of the long intermediate film original sheet, that has both principal surfaces nonparallel to each other, and that has a constant thickness profile in a length direction;
a step G of interposing the sheet between the first glass plate and the second glass plate; and
a step F of cutting out the intermediate film from the sheet interposed between the first glass plate and the second glass plate, the intermediate film being a trapezoidal or rectangular shape intermediate film, being provided with a wedge angle profile in the longitudinal direction and the horizontal direction of the laminated glass, and having a thickness based on the wedge angle profile, the thickness continuously decreasing from the upper side to the lower side, and continuously decreasing in the direction from the driver's seat side to the passenger seat side, and the intermediate film being further provided with a constant thickness profile only in one direction.

11. The manufacturing method for the laminated glass according to claim 9 or 10,
wherein the intermediate film is a film that is cut out after being drawn out from a roll of an intermediate film original sheet, both principal surfaces of the intermediate film original sheet are nonparallel, and a thickness profile in a drawing-out direction of the roll is constant.

12. A manufacturing method for the laminated glass according to any one of claims 1, and 5 to 8, the manufacturing method for the laminated glass comprising:
a step A of preparing a curved first glass plate having a trapezoidal or rectangular shape, and a second glass plate having the same shape as the first glass plate;
a step F of preparing an intermediate film having both principal surfaces parallel to each other; and
a step D of interposing the intermediate film between the first glass plate and the second glass plate,
wherein at least one selected from a group consisting of the first glass plate and the second glass plate has a wedge angle profile that has a thickness continuously decreasing in the direction from one lateral side to an opposite lateral side, and both principal surfaces of the glass plate are nonparallel, and the thickness profile in one direction is constant.
